# EUROPÄISCHE PATENTANMELDUNG

(11) **EP 4 786 201 A1**
(43) Veröffentlichungstag der Anmeldung: **05.08.2026**
(21) Anmeldenummer: 26150486.4
(22) Anmeldetag: 07.01.2026
(51) Int. Cl.: B42D 25/29, B32B 27/10, B42D 25/333, B42D 25/351, B42D 25/373, B42D 25/45, B42D 25/455, B42D 25/46, B42D 25/47

(54) **WERT- ODER SICHERHEITSDOKUMENT UND VERFAHREN ZUR HERSTELLUNG**

(30) Priorität: 10.01.2025 DE 102025000185
(71) Anmelder: Bundesdruckerei GmbH, 10969 Berlin (DE)
(72) Erfinder: Dorff, Giselher, 10969 Berlin (DE)

(57) **Zusammenfassung**

Die vorliegende Erfindung betrifft einen Druckträger (11) für ein Wert- und/oder Sicherheitsdokument (10), ein Verfahren zur Herstellung eines solchen Druckträgers (11) sowie ein Wert- und/oder Sicherheitsdokument mit einem entsprechendem Druckträger (11). Der Druckträger (11) weist wenigstens eine Kunststoffschicht (14) mit einer ersten Seite und einer zweiten Seite auf, wenigstens eine mit der Kunststoffschicht (14) verbundene erste Substratschicht (12) auf der ersten Seite der Kunststoffschicht (14), sowie wenigstens eine mit der Kunststoffschicht (14) verbundene zweite Substratschicht (15) auf der zweiten Seite der Kunststoffschicht (14), wobei die erste Substratschicht (12) wenigstens abschnittsweise ausgestaltet ist, den Großteil des sichtbaren Lichtes zu absorbieren. Um trotz der lichtabsorbierenden Eigenschaften der ersten Substratschicht gängige Sicherheitsmerkmale (18) verwenden zu können, weist die erste Substratschicht (12) wenigstens eine Aussparung (13) auf, die einen Fensterbereich (17) definiert, wobei die Kunststoffschicht (14) wenigstens im Fensterbereich (17) lichtdurchlässig ist und die zweite Substratschicht (15) mit zumindest einem Sicherheitsmerkmal (18) versehen ist, das wenigstens abschnittsweise im Fensterbereich (17) angeordnet ist.

## Beschreibung

Die vorliegende Erfindung betrifft einen Druckträger für ein Wert- und/oder Sicherheitsdokument, ein Verfahren zur Herstellung eines solchen Druckträgers sowie ein Wert- und/oder Sicherheitsdokument mit einem entsprechendem Druckträger.

Druckträger für Wert- oder Sicherheitsdokumente sind meist aus Sicherheitspapieren gefertigt, die aus Baumwollfasern hergestellt sind. Zur Verbesserung der Haltbarkeit werden beispielsweise Verstärkungsfasern zugesetzt oder Kunststoffsubstrate eingesetzt.

In der WO 2004/028825 A2 ist ein Sicherheitspapier für Wertdokumente mit einem mehrschichtigen Substrat beschrieben, das eine ein- oder beidseitig mit einer Folie beschichtete Papierschicht aufweist. Sicherheitsmerkmale sind im Papier oder auch auf der Folie angeordnet, wobei in der Papierschicht Wasserzeichen vorgesehen sein können.

Fälschungen von Wert- oder Sicherheitsdokumenten, wie Banknoten, Reisepässe, Tickets und Schecks, werden mit leicht erhältlichen, haushaltsüblichen Druck- und Vervielfältigungsgeräten versucht, wie Scanner, Kopierer, Laserdrucker oder Tintenstrahldrucker. Aus diesem Grund weisen Wert- und Sicherheitsdokumente Sicherheitsmerkmale auf, die das Fälschen der Dokumente erschweren und die Prüfung der Echtheit der Dokumente erleichtern.

Wert- oder Sicherheitsdokumente umfassen häufig ein Sicherheitspapier, welches in der Regel Sicherheitselemente aufweist, z.B. in Form von Wasserzeichen, die die Authentizität des Papieres belegen. Solche Wasserzeichen entstehen während der Herstellung des Sicherheitspapiers im Nassteil der Papiermaschine durch Anlagerung der feuchten Papiermasse (Pulpe) auf einem bewegten Entwässerungssieb, welches unterschiedliche Prägetiefen aufweist.

Zur Herstellung eines Wasserzeichens wird mit einem geprägten Entwässerungssieb die Anlagerung von Papierfasern bei der Blattbildung derart beeinflusst, dass sich bereichsweise mehr oder weniger Papiermasse anlagert. So lagert sich im Bereich einer Tiefprägung, d.h. einer Vertiefung im Sieb relativ zur mittleren Siebhöhe, mehr Papiermasse an und es treten dort dickere und dadurch in der Durchsicht dunkler erscheinende Stellen im fertigen Papier auf. Bei einer Hochprägung, d.h. einer Erhöhung im Sieb relativ zur mittleren Siebhöhe, lagert sich hingegen weniger Papiermasse an, wodurch dünnere und in der Durchsicht hellere Stellen im Papier entstehen. Es können auch Multitone-Wasserzeichen mit dunkleren und helleren Bereichen erzeugt werden. Der das Wasserzeichen umgebende Bereich des Papiers mit entsprechend der mittleren Siebhöhe im Wesentlichen konstanter Papierdicke wird als Velinbereich bezeichnet.

Zur Erhöhung der Fälschungssicherheit können Wert- oder Sicherheitsdokumente mit einer sehr dunklen bzw. stark Licht absorbierenden, insbesondere schwarzen Substratschicht versehen sein, z.B. wie in der noch nicht veröffentlichten DE102024112437.7 beschrieben. Die Lichtreflektionscharakteristiken einer derartigen Substratschicht können derart gewählt sein, dass gewöhnliche Haushaltsvervielfältigungsgeräte bei einem Versuch einer Kopie bzw. einer Fälschung des Dokuments diese nicht mehr erreichen. Beispielsweise sind übliche Haushaltsvervielfältigungsgeräte wie Tintenstrahldrucker oder Laserdrucker typischerweise auf weißes Substrat ausgelegt. Lichtreflektionscharakteristiken wie bei einem mit schwarzem Fluid imprägnierten Substrat können diese daher nicht erreichen.

Ein Nachteil einer sehr dunklen bzw. lichtundurchlässigen Substratschicht ist, dass übliche Sicherheitsmerkmale, deren Anwendung ein helles oder lichtdurchlässiges Substrat benötigt, mit einem sehr dunklen Substrat kaum oder gar nicht anwendbar sind. Damit stehen viele der üblicherweise verwendeten Sicherheitsmerkmale, welche die Fälschungssicherheit von Wert- oder Sicherheitsdokumente erhöhen, nicht zur Verfügung.

Es ist daher die Aufgabe der vorliegenden Erfindung, die Fälschungssicherheit von Wert- oder Sicherheitsdokumente mit stark Licht absorbierendem Substrat zu verbessern.

Es soll ein leicht erkennbares und schwer fälschbares Sicherheitsmerkmal geschaffen werden. Der vorliegenden Erfindung liegt darüber hinaus als wesentliche weitere Aufgabe zugrunde, ein kostengünstig, einfach und schnell realisierbares Sicherheitsmerkmal zu schaffen.

Die Aufgabe wird durch die Merkmale der unabhängigen Patentansprüche gelöst. Weitere vorteilhafte Ausführungsformen sind Gegenstand der Beschreibung, der Figuren sowie der abhängigen Patentansprüche.

Gemäß einem ersten Aspekt des erfindungsgemäßen Druckträgers weist dieser wenigstens eine Kunststoffschicht mit einer ersten Seite und einer zweiten Seite auf. Auf der ersten Seite der Kunststoffschicht ist wenigstens eine mit der Kunststoffschicht verbundene erste Substratschicht vorgesehen, auf der zweiten Seite der Kunststoffschicht wenigstens eine mit der Kunststoffschicht verbundene zweite Substratschicht. Die erste Substratschicht ist wenigstens abschnittsweise ausgestaltet, den Großteil des sichtbaren Lichtes zu absorbieren. Als sichtbares Licht wird vorliegend durch das menschliche Auge wahrnehmbares Licht bezeichnet, in einem Wellenlängenbereich von etwa 380 bis 780 nm. Des Weiteren weist die erste Substratschicht wenigstens eine Aussparung auf, die einen Fensterbereich des Druckträgers definiert. Die Kunststoffschicht ist wenigstens im Fensterbereich lichtdurchlässig, wobei die zweite Substratschicht zumindest ein Sicherheitsmerkmal aufweist, das wenigstens abschnittsweise im Fensterbereich angeordnet ist.

Unter dem Fensterbereich wird vorliegend der Bereich des Druckträgers verstanden, der sich innerhalb der Grenzen der Aussparung befindet bzw. innerhalb der Projektion der Aussparung auf die darunterliegenden Schichten des Druckträgers. Zu dem Fensterbereich gehört also sowohl der durch die Aussparung freigelegte Bereich der Kunststoffschicht als auch der bzgl. der Kunststoffschicht gegenüber der Aussparung der ersten Substratschicht befindliche Bereich der zweiten Substratschicht. Die Aussparung der ersten Substratschicht bildet ein Fenster, welches zumindest bei einer transparenten Ausgestaltung der Kunststoffschicht den Blick auf den Fensterbereich der zweiten Substratschicht freigibt.

Soweit in der Beschreibung und in den Ansprüchen der vorliegenden Anmeldung der Begriff "Wert- und/oder Sicherheitsdokument" genannt wird, ist darunter insbesondere ein Zahlungsmittel, bspw. eine Banknote zu verstehen. Des Weiteren kann es sich bei dem "Wert- und/oder Sicherheitsdokument" z.B. um einen Scheck, ein ID-Dokument wie einen Reisepass, Personalausweis, Führerschein, oder ein Zugangskontrollausweis, einen Fahrzeugschein, Fahrzeugbrief, Visum, eine Scheck-, Bank-, Kredit- oder Barzahlungskarte, Gesundheitskarte, einen Firmenausweis, Berechtigungsnachweis, Geschenk- oder Einkaufsgutschein, Frachtbrief oder einen sonstigen Berechtigungsnachweis, Steuerzeichen, Postwertzeichen, Ticket, oder ein Etikett zur Produktsicherung handeln.

Als lichtdurchlässig wird vorliegend ein Material angesehen, das für Licht im sichtbaren Wellenlängenbereich, etwa von 380 bis 780 nm, durchlässig ist.

Als transparent für Licht eines Wellenlängenbereichs wird vorliegend ein Material angesehen, durch das hindurch eine Abbildung gemäß der geometrischen Optik mit Licht dieser Wellenlänge oder dieses Wellenlängenbereichs möglich ist. Eine klare Folie ist somit, unabhängig ob sie farblos oder eingefärbt ist, transparent. Eine diffus streuende, einen milchigen Eindruck erweckende Folie ist hingegen im Sinne dieser Definition nicht transparent, sondern wird als transluzent bezeichnet.

Vorliegend wird unter einem Druckträger ein Material verstanden, das in Druckverfahren bedruckt werden kann, also alles, was mit bekannten technischen Verfahren bedruckbar ist. Unter einem Druckträger für ein Wert- und/oder Sicherheitsdokument wird vorliegend ein Material zur Herstellung von Wert- und/oder Sicherheitsdokumenten verstanden.

Gemäß einer bevorzugten Ausführungsform der vorliegenden Erfindung ist der Druckträger von einem Mehrschichtsubstrat gebildet, umfassend wenigstens eine die erste Substratschicht bildende erste Papierlage und wenigstens eine die zweite Substratschicht bildende zweite Papierlage. Dabei ist die Kunststoffschicht, insbesondere aus wenigstens einem thermoplastischen polymeren Material, vorzugweise zwischen den Papierlagen angeordnet und mit den Papierlagen beidseitig direkt verbunden.

Die erste Substratschicht kann mit der Kunststoffschicht unmittelbar verbunden sein, z.B. indem die Kunststoffschicht in schmelzflüssigem oder zumindest durch Erwärmung aufgeweichtem Zustand auf die erste Substratschicht aufgebracht wird. Gleichermaßen kann die die zweite Substratschicht unmittelbar mit der Kunststoffschicht verbunden sein. Bevorzugt erfolgt die Verbindung zwischen erster Substratschicht, Kunststoffschicht und zweiter Substratschicht in einem Arbeitsgang, in welchem eine die Kunststoffschicht bildende Kunststofflage zwischen eine die erste Substratschicht bildende Lage, insbesondere eine erste Papierlage, und eine die zweite Substratschicht bildende Lage, insbesondere eine zweite Papierlage, zugeführt wird. Die die erste Substratschicht bildende Lage und die die zweite Substratschicht bildende Lage können dazu beispielsweise auf Rollen zugeführt werden, wobei das die Kunststoffschicht bildende Polymer aufgeschmolzen und zwischen die die erste Substratschicht bildende Lage und die die zweite Substratschicht bildende Lage extrudiert wird.

In alternativen Ausführungen können die erste und/oder zweite Substratschicht mit der Kunststoffschicht mittelbar verbunden sein, beispielsweise über einen Klebstoff. Ein technischer Vorteil dieser Ausgestaltung ist, dass auch ein kaltes Fügen der Schichten möglich ist. Somit können auch hitzeempfindliche Sicherheitsmerkmale, insbesondere zwischen den Schichten angeordnete als Sicherheitsmerkmale dienende Informationsträger, in den Druckträger eingebracht werden.

Die erste Substratschicht und/oder die zweite Substratschicht wird beispielsweise durch ein Aktiv-Klebemittel oder durch Laminierung mittels Druck und/oder Temperatur mit der zumindest einen Kunststoffschicht verbunden. Dadurch kann eine schwer lösbare oder unlösbare Verbindung zwischen der jeweiligen Substratschicht und der Kunststoffschicht geschaffen werden. Die vorzugsweise nicht zerstörungsfrei lösbare Verbindung zwischen erster und/oder zweiter Substratschicht und Kunststoffschicht bildet ein weiteres Sicherheitsmerkmal.

Das Sicherheitsmerkmal der zweiten Substratschicht ist bevorzugt bzgl. der Kunststoffschicht gegenüber der Aussparung der ersten Substratschicht angeordnet. Somit kann die Aussparung zum einen ermöglichen, das Sicherheitsmerkmal durch die Aussparung und die transparente Kunststoffschicht zu betrachten. Zum anderen kann die Aussparung eine rückseitige Beleuchtung des Sicherheitsmerkmals ermöglichen, z.B. indem das Wert- und/oder Sicherheitsdokument gegen eine natürliche Lichtquelle wie die Sonne oder eine künstliche Lichtquelle gehalten wird. Mit rückwärtiger Beleuchtung prüfbare Sicherheitsmerkmale, wie z.B. ein Wasserzeichen, lassen sich somit trotz der den Großteil des sichtbaren Lichtes absorbierenden ersten Substratschicht, insbesondere auch mit vollständig lichtundurchlässiger erster Substratschicht prüfen.

Die erste Substratschicht kann gemäß bevorzugten Ausführungsformen vollständig lichtundurchlässig sein. Somit wird auch bei rückwärtiger Beleuchtung des Druckträgers seitens der zweiten Substratschicht außerhalb der Aussparung ein dunkler, bevorzugt tiefschwarzer Farbeindruck des Druckträgers ermöglicht.

Um die Festigkeitseigenschaften der Kunststoffschicht oder die Verbindung zu den außenliegenden Substratschichten zu verbessern, kann die Kunststoffschicht mehrschichtig aufgebaut sein. Beispielsweise kann die Kunststoffschicht mit einem innenliegenden, ersten Polymer mit höherer Schmelztemperatur und beidseitig des innenliegenden Polymers mit einem zweiten Polymer mit niedrigerer Schmelztemperatur und/oder besseren Fließeigenschaften in Schmelzflüssigem Zustand versehen sein.

Die erste und/oder zweite Substratschicht können vorzugsweise von Papier gebildet sein. Gemäß einer bevorzugten Ausführungsform handelt es sich bei zumindest einer Papierlage um ein Sicherheitspapier. Das Papier kann beispielsweise auf einer Rundsieb-Papiermaschine oder auf einer Langsieb-Papiermaschine gefertigt sein.

Gemäß einer weiteren bevorzugten Ausführungsform ist der Druckträger dadurch gekennzeichnet, dass es neben der ersten Papierlage und der zweiten Papierlage keine weiteren Papierlagen gibt. Vorzugsweise haben die Papierlagen dabei ein Flächengewicht im Bereich 10 - 110 g/m², weiter vorzugsweise im Bereich von 10-80 g/m², weiter vorzugsweise im Bereich von 20-50 g/m².

In weiteren Ausführungen kann die Kunststoffschicht aus einem thermoplastischen polymeren Material gebildet sein, das insbesondere im Bereich der wenigstens einen Aussparung transparent ist, vorzugsweise hochtransparent und mit glatter Oberfläche.

In bevorzugten Ausgestaltungen verfügt die Kunststoffschicht über ein Flächengewicht von mehr als 20 g/m², um eine ausreichende Festigkeit zu gewährleisten. Das Flächengewicht beträgt vorzugsweise höchstens 100 g/m², um eine ausreichende Flexibilität der Kunststoffschicht zu erreichen. In bevorzugten Ausgestaltungen liegt das Flächengewicht der Kunststoffschicht im Bereich von 22-80 g/m², insbesondere im Bereich von 25-45 g/m². Die Dicke der Kunststoffschicht kann in einem Bereich von 10-50 Mikrometer liegen, insbesondere bevorzugt in einem Bereich von 30-40 Mikrometern.

Gemäß bevorzugten Ausführungsformen kann die Kunststoffschicht aus einem thermoplastischen Polymer gebildet sein, das einen Glasübergangspunkt und/oder Schmelzpunkt oberhalb von 20° C, vorzugsweise oberhalb von 40° C aufweist. Mit solchen Materialien kann beispielsweise die Extrusion bei einer Schmelztemperatur im Bereich von 250-350° erfolgen, wobei bevorzugt diese Temperatur beim Austritt aus der Schlitzdüse eingestellt wird.

In Bezug auf das Material der bevorzugt transparenten Kunststoffschicht haben sich zum Beispiel folgende Materialien als geeignet erwiesen: Polyamid (PA), Polyethylen (PE), Polypropylen (PP), Polyvinylchlorid (PVC), weich-PVC (PVC-P), Polyester, Co-Polyester, Polycarbonat (PC), Polymethylmethacrylat (PMMA), Polyoxymethylen (POM), Polyethylenterephthalat (PET), Polyetheretherketon (PEEK), Polystyrol (PS).

Die Kunststoffschicht kann aus Mischungen (Blends) der vorgenannten Polymere oder Copolymere gebildet sein. Die Kunststoffschicht kann bevorzugt von einem Polyamid 12 und/oder einem amorphen Copolyamid 12 gebildet sein. Ebenfalls möglich sind cycloaliphatische transparente Polyamide, beispielsweise auf MACM-Basis, bevorzugt MACM12.

In bevorzugten Ausführungen ist die Kunststoffschicht aus Polyamid gebildet. Das verwendete Polyamid kann insbesondere Polyamid 6 (PA6), und/oder Polyamid 12 (PA12) sein, wobei amorphe Formen bevorzugt werden.

In einem erfindungsgemäßen Verfahren zur Herstellung eines Druckträgers wie oben dargelegt wird zunächst eine erste Lage zur Erzeugung der ersten Substratschicht mit einer den Großteil der Wellenlängen des sichtbaren Lichts absorbierenden Färbung und/oder Pigmentierung und mit wenigstens einer Aussparung hergestellt. Es folgt die Herstellung einer zweiten Lage zur Erzeugung der zweiten Substratschicht, mit wenigstens einem Sicherheitsmerkmal. Zudem wird eine wenigstens abschnittsweise lichtdurchlässige Kunststofflage hergestellt. Erste Substratlage und zweite Substratlage werden registriert zur Kunststofflage zugeführt. Es folgt das Aufbringen der ersten Substratlage an einer ersten Seite der Kunststofflage und das Aufbringen der zweiten Substratlage an einer zweiten Seite der Kunststofflage, so dass die wenigstens eine Aussparung und das Sicherheitsmerkmal übereinanderliegen.

Die die erste und die zweite Substratschicht bildende Lagen können jeweils dem Fügeprozess insbesondere von einer Rolle zugeführt werden. Vor dem Fügeprozess kann die erste Substratschicht mit einer im Wesentlichen den Großteil sämtlicher Wellenlängen des sichtbaren Lichts absorbierenden Färbung und/oder Beschichtung hergestellt. Die erste Substratschicht kann aus Papier gebildet sein, wobei bereits bei der Papierherstellung der Pulpe ein lichtabsorbierendes Pigment, insbesondere Kohlenstoff zugefügt werden kann. Der erzeugten ersten Substratschicht bzw. der die erste Substratschicht bildenden Lage können nun in einem weiteren Schritt vor dem Fügen des Druckträgers Aussparungen ausgeschnitten oder ausgestanzt werden.

Die zweite Substratschicht kann zunächst mit dem für den Fensterbereich vorgesehenen Sicherheitsmerkmal hergestellt und/oder zunächst mit einem für den Fensterbereich vorgesehenen Sicherheitsmerkmal versehen werden, wobei das wenigstens eine Sicherheitsmerkmal vorzugsweise registriert zu den Aussparungen der die erste Substratschicht bildenden Lage eingebracht wird.

Gemäß bevorzugten Ausführungen des Verfahrens können erste Substratlage und/oder zweite Substratlage mit der Kunststofflage wenigstens teilweise verschmolzen, insbesondere laminiert, oder verklebt und/oder durch plastische Verformung verbunden werden.

Vorzugsweise kann die Kunststoffschicht bei der Herstellung des Druckträgers in schmelzflüssigem Zustand zwischen die erste und zweite Substratschicht zugeführt werden. Die erste und die zweite Substratschicht, die jeweils bevorzugt von Papierlagen gebildet werden, werden vorzugsweise registriert zugeführt, um das Sicherheitsmerkmal der zweiten Substratschicht im durch die Aussparung der ersten Substratschicht definierten Fensterbereich anzuordnen. Erste und zweite Substratschicht können anschließend mit der Kunststoffschicht gefügt werden. Sie können insbesondere zwischen einem Walzenpaar in einem kontinuierlichen Prozess verpresst werden, wobei eine stoffschlüssige Verbindung zwischen den Papierlagen und der Kunststoffschicht entsteht.

Das resultierende bahnförmige Mehrschichtsubstrat wird anschließend typischerweise zu einzelnen, jeweils ein Wert- und/oder Sicherheitsdokument bildenden Teilen gestanzt oder geschnitten.

Die Kunststoffschicht des erfindungsgemäßen Druckträgers ist wenigstens im Fensterbereich lichtdurchlässig. Sie kann transluzent sein. Somit kann zumindest das

Vorhandensein eines Sicherheitsmerkmals in der zweiten Substratschicht oder zwischen zweiter Substratschicht und Kunststoffschicht aus einem Blickwinkel seitens der ersten Substratschicht optisch geprüft werden. Alternativ kann die Kunststoffschicht transparent sein. Auf diese Weise können auch filigrane Strukturen eines Sicherheitsmerkmals aus einem Blickwinkel seitens der ersten Substratschicht optisch geprüft werden.

Gemäß einer bevorzugten Weiterbildung der Erfindung kann die erste Substratschicht des Dokumentes ein Pigment aufweisen, das den Großteil der Wellenlängen des sichtbaren Lichtspektrums, d.h. den Großteil des sichtbaren Lichtes absorbiert. Durch das den Großteil des sichtbaren Lichtes absorbierende Substrat entsteht mit den auf dem Dokument angeordneten, stark reflektierenden Pigmenten ein sehr starker Kontrast, der mit den meist in haushaltsüblichen Druckern und Kopierern verwendeten, hellen Substraten nicht darstellbar ist.

Um eine besonders wirksame Absorption des Lichtes zu erreichen, kann die erste Substratschicht Kohlenstoffpartikel aufweisen. Die Kohlenstoffpartikel können bevorzugt bereits während der Herstellung der ersten Substratschicht hinzugefügt werden. Beispielsweise kann die erste Substratschicht aus Papier hergestellt sein, wobei Kohlenstoffpartikel bereits der Papiermasse (Pulpe) beigemischt werden.

In einer weiteren Ausführung kann die erste Substratschicht des Druckträgers ausgestaltet sein, Licht in einem sichtbaren Wellenlängenbereich im Wesentlichen vollständig zu absorbieren. Dabei werden bevorzugt im Wesentlichen sämtliche Wellenlängen des sichtbaren Lichtspektrums absorbiert. Die erste Substratschicht kann insbesondere schwarz sein, vorzugsweise tiefschwarz. Die erste Substratschicht kann somit eine tiefschwarze Färbung aufweisen, die durch die in haushaltsüblichen Reproduktionsgeräten verwendeten Drucktechniken mit subtraktiver Farbmischung nicht darstellbar ist und damit die Fälschungssicherheit erhöht. Dazu kann die erste Substratschicht mit einem schwarzen Farbstoff versehen sein. Der Farbstoff kann aufgedruckt und/oder mittels einer Beschichtung aufgebracht oder durchimprägniert sein. In bevorzugten Ausführungsformen wird die tiefschwarze Färbung durch Kohlenstoffpartikel erreicht. Für einen verbessert tiefschwarzen Farbeindruck kann die erste Substratschicht Kohlenstoffnanoröhren aufweisen und/oder mit diesen beschichtet sein. Für eine weitere Verbesserung der Absorption des Lichts können gerichtete Kohlenstoffnanoröhren vorgesehen sein. Die erste Substratschicht kann insbesondere eine Beschichtung mit Vantablack (Vertically Aligned Nano Tube Array) aufweisen.

In alternativen Ausführungen kann die erste Substratschicht ausgestaltet sein, ausgewählte Wellenlängenbereiche zumindest teilweise zu reflektieren, um der ersten Substratschicht bei insgesamt dunklem Erscheinungsbild einen Farbeindruck aufzuprägen.

Vorzugsweise kann die erste Substratschicht zumindest abschnittsweise mit einem schwarzen Fluid durchimprägniert sein. Das schwarze Fluid kann bevorzugt Kohlenstoffpartikel aufweisen. Somit kann die erste Substratschicht tiefschwarz gefärbt sein. Durch den damit entstehenden Eindruck eines tiefschwarzen Hintergrundes verstärkt sich für den Betrachter bei Bedruckung der ersten Substratschicht mit stark reflektierenden Farben der Eindruck eines starken Kontrastes. Mit nebeneinandergedruckten, stark reflektierenden Pigmenten lässt sich zudem der Eindruck einer additiven Mischung des aus nebeneinanderliegenden, pigmentierten Teilflächen reflektierten Lichtes erreichen.

Die erste Substratschicht weist bevorzugt einen Schichtbereich auf, der über die gesamte Dicke mit einem schwarzen Fluid durchimprägniert ist, das Kohlenstoffpartikel aufweist.

Die erste Substratschicht kann zweite und/oder weitere Schichten aufweisen. Die zweiten und/oder weiteren Substratschichten können vorzugsweise zumindest abschnittsweise mit einem schwarzen Fluid durchimprägniert sein.

Die erste und/oder die zweite Substratschicht kann vorteilhafterweise aus einem Sicherheitspapier bestehen. Dadurch kann zum einen die Lebensdauer erhöht, zum anderen die Gefahr von Manipulationen verringert werden.

In einer weiteren vorteilhaften Ausgestaltung des erfindungsgemäßen Druckträgers kann die erste Substratschicht in einer Schicht oder in mehreren Schichten des Druckträgers angeordnet sein. Um die Eigenschaften der ersten Substratschicht zu verbessern, insbesondere die Absorption von Licht, vor allem im sichtbaren Wellenlängenbereich, können mehrere Materialien innerhalb der ersten Substratschicht kombiniert sein, beispielsweise eine Kunststofflage mit einer Papierlage. Die Schichten der ersten Substratschicht können jeweils einen Großteil des sichtbaren Lichts absorbierend bzw. schwarz ausgestaltet sein.

In bevorzugten Ausführungsformen der Erfindung kann die zweite Substratschicht zumindest im Fensterbereich wenigstens abschnittsweise lichtdurchlässig sein. Die zweite Substratschicht kann zumindest teilweise transluzent oder transparent sein. Die zweite Substratschicht kann insbesondere eine für die Prüfung eines Sicherheitsmerkmals, beispielsweise ein zwischen zweiter Substratschicht und Kunststoffschicht oder auf der Kunststoffschicht angeordnetes Sicherheitsmerkmal, geeignete Lichtdurchlässigkeit aufweisen. Vorzugsweise weist die zweite Substratschicht eine für die Prüfung eines in der zweiten Substratschicht vorhandenen Wasserzeichens geeignete Transluzenz auf.

In weiteren Ausführungen kann die zweite Substratschicht wenigstens abschnittsweise den Großteil des sichtbaren Lichtes bzw. des sichtbaren Farbspektrums reflektieren. Die zweite Substratschicht kann insbesondere wenigstens abschnittsweise weiß oder in einem Weißton gestaltet sein. Dies ermöglicht eine kontrastreiche Darstellung von Sicherheitsmerkmalen, insbesondere Wasserzeichen sowie von aufgedruckten Sicherheitsmerkmalen, wie z.B. Guillochen.

Gemäß einer weiteren Ausgestaltung kann die zweite Substratschicht zumindest abschnittsweise in einem dunklen Farbton gestaltet sein. Beispielsweise kann die zweite Substratschicht wenigstens abschnittsweise einen dunklen Grauton und/oder Blauton aufweisen. Vor dem Hintergrund der wenigstens abschnittsweise den Großteil des sichtbaren Lichtes absorbierenden ersten Substratschicht auf der ersten Seite der Kunststoffschicht kann somit zumindest in einem lichtdurchlässigen Abschnitt der Kunststoffschicht erreicht werden, dass die zweite Substratschicht aufgrund des dunklen Hintergrundes dunkler erscheint. Um diesen Effekt zu verstärken, kann die zweite Substratschicht in einem dunklen Farbton und zusätzlich semitransparent gestaltet sein. Ein Vorteil dieser Lösung ist das erreichbare einheitlich dunkle, insbesondere schwarze Erscheinungsbild des Druckträgers. Beispielsweise kann mit einer schwarzen, insbesondere tief-schwarzen ersten Substratschicht auf der ersten Seite der Kunststoffschicht eine für den Betrachter zumindest ähnlich dunkle Wirkung der zweiten Substratschicht erreicht werden.

Die erste und/oder die zweite Substratschicht des Druckträgers können vorzugsweise von Papier gebildet sein. Das Papier der ersten und/oder zweiten Substratschicht kann zum Beispiel ein auf Baumwolle basierendes Sicherheitspapier sein. Der technische Vorteil der Verwendung von Papier auf wenigstens einer Seite des Druckträgers ist die Möglichkeit, konventionelle, auf Papier aufbringbare oder in Papier einbringbare Sicherheitsmerkmale anzuwenden.

In alternativen Ausführungsformen können die erste und/oder zweite Substratschicht auch von anderen Materialien gebildet sein. Die erste und/oder zweite Substratschicht können insbesondere auf Synthesefasern basierendes Papier aufweisen, beispielsweise Papier auf Basis von Viskose, Polyamid und/oder Polyester. Ein somit erreichbarer technischer Vorteil ist eine verlängerte Lebensdauer.

Gemäß weiteren bevorzugten Ausgestaltungen eines erfindungsgemäßen Druckträgers kann das Sicherheitsmerkmal der zweiten Substratschicht mittels rückseitiger Beleuchtung prüfbar ausgestaltet sein, wobei die Beleuchtung aus Richtung der ersten und/oder der zweiten Seite der Kunststoffschicht erfolgen kann.

In besonders bevorzugten Ausgestaltungen ist das mindestens eine Sicherheitsmerkmal ein Wasserzeichen. Das wenigstens abschnittsweise im Fensterbereich angeordnete Wasserzeichen kann somit ein Level-1-Sicherheitsmerkmal bilden, dass mit handelsüblichen oder natürlichen Lichtquellen mit bloßem Auge prüfbar ist. Dabei erfolgt die rückseitige Beleuchtung des Wasserzeichens durch die Aussparung in der ersten Substratschicht sowie durch die zwischen erster und zweiter Substratschicht liegende Kunststoffschicht. Mittels des lichtdurchlässigen Fensterbereichs kann also ein Wert- und/oder Sicherheitsdokument mit dunklem und/oder tiefschwarzem Substrat geschaffen werden, das ein Wasserzeichen aufweist. Dabei kann die erste Substratschicht vollständig lichtundurchlässig sein.

Die erste Substratschicht kann erfindungsgemäß zur Erhöhung der Fälschungssicherheit einen dunklen, insbesondere schwarzen Farbton aufweisen, die zweite Substratschicht zur optimalen Darstellung des Wasserzeichens einen hellen, insbesondere weißen Farbton.

Alternativ oder zusätzlich kann die zweite Substratschicht eines oder mehrere aus den folgenden Sicherheitsmerkmalen aufweisen: Eine Perforation, ein Sicherheitsfaden und/oder eine Sicherheitsfolie vorgesehen. Die Sicherheitsfolie kann insbesondere auf der zweiten Substratschicht oder zwischen zweiter Substratschicht und Kunststoffschicht aufgebracht sein. Somit kann bei rückwärtiger Beleuchtung des Druckträgers das Sicherheitsmerkmal geprüft werden.

Ganz besonders vorteilhaft im Zusammenhang mit dem erfindungsgemäßen Druckträger ist es, dass er mit von Druckträgern aus Papier bekannten Sicherheitsmerkmalen versehen werden kann. Bekannte Sicherheitsmerkmale können zumindest in die zweite Substratschicht vor, während oder nach einem Laminationsprozess eingebaut werden. Wenigstens ein der zweiten Substratschicht hinzugefügtes Sicherheitsmerkmal kann insbesondere optischer Natur sein, wie Wasserzeichen, insbesondere Graustufen-Wasserzeichen, Guillochen, Sicherheitsfäden, sogenannte optically variable devices (OVDs), Melierfasern, lumineszenzfähige Fasern, Sicherheitspigmente, irisierende Farbapplikationen, Mikroperforationen, Mikrodrucke, Offsetdrucke, Tiefdruck, und/oder Reagenzien (Reaktion auf Manipulation).

In weiteren Ausgestaltungen können auf dem Druckträger bei der Herstellung eines Wert- und/oder Sicherheitsdokumentes wenigstens ein Chip, insbesondere ein RFID-Chip, ein Transponder, und/oder ein Magnetstreifen aufgebracht werden, um Informationen zu speichern und/oder die Fälschungssicherheit zu erhöhen.

Ebenso kann die Kunststoffschicht im Fensterbereich mit Sicherheitsmerkmalen versehen werden. Beispielsweise kann ein Aufdruck auf der Kunststoffschicht vorgesehen sein, der bei einer Reflexion des einfallenden Lichtes infolge der dahinterliegenden Substratschicht nicht sichtbar ist, welcher aber bei einer Transmission, d.h. wenn das Dokument vor eine Lichtquelle gehalten wird, erkannt werden kann. Ein Vorteil ist, dass ein derartiges Sicherheitsmerkmal auch mit einem Kopiergerät nicht reproduziert werden kann.

Als Sicherheitsmerkmal der Kunststoffschicht und/oder der ersten Substratschicht kann zusätzlich oder alternativ wenigstens eines der folgenden Anwendung finden: Melierfasern, Metallfasern, Markierungsstoffe, IR-Farbstoffe, UV-Farbstoffe, Sicherheitspigmente, Fluoreszenzfarbstoffe, Effektpigmente, Interferenzpigmente, Metallpigmente, Reaktivfarbstoffe, UV-Absorber, wobei diese Sicherheitsmerkmale als Additive der Schmelze beigegeben oder bei der Herstellung des Druckträgers, insbesondere bei der Fügung der Substratschichten mit der Kunststoffschicht, eingestreut werden können. In weiteren Ausführungsformen des Druckträgers kann als Sicherheitsmerkmal der Kunststoffschicht wenigstens eines der folgenden vorgesehen sein: Ein fluoreszierender Bereich, wenigstens ein polarisierender Bereich, wenigstens ein polarisierender und fluoreszierender Bereich, wenigstens ein polarisierender und absorbierender Bereich, wenigstens ein photochromer Bereich, und/oder wenigstens ein Hologramm.

Das Sicherheitsmerkmal der zweiten Substratschicht kann besonders bevorzugt ein Wasserzeichen sein. Das Wasserzeichen kann ein einzelnes Motiv darstellen oder aber mit anderen Wasserzeichentypen wie beispielsweise echten Mehrstufenwasserzeichen, Schattenwasserzeichen, Elektrotypes, und/oder unechten Wasserzeichen kombiniert werden. Das Wasserzeichen kann auch mit Sicherheitsmerkmalen wie Melierfasern, Sicherheitsfäden, maschinenlesbaren Merkmalen und/oder Fluoreszenzpigmenten kombiniert werden. Weiter kann es mit durch Veredelung und/oder Druck ein- bzw. aufgebrachten Merkmalen, wie Siebdruckmerkmalen, Sicherheitsfolien, insbesondere geprägten Folien und/oder Blindprägungen, kombiniert werden.

Vorzugsweise weist die wenigstens eine Kunststoffschicht Polyamid auf und/oder die Kunststoffschicht ist aus Polyamid gebildet. Die wenigstens eine Kunststoffschicht kann alternativ oder zusätzlich PE (Polyethylen), PC (Polycarbonat), Pl (Polyimid), und/oder PET (Polyethylenterephthalat) aufweisen, oder diesen Kunststoffen bezüglich ihrer Eigenschaften ähnliche Kunststoffe oder eine Mischung aus diesen Kunststoffen. Diese thermoplastischen Kunststoffe weisen den Vorteil auf, dass diese elastisch und bruchunempfindlich sind.

Bevorzugt besteht die Kunststoffschicht aus nur einer Schicht. Die Kunststoffschicht ist bevorzugt aus thermoplastischem Kunststoff hergestellt. Somit kann die Herstellung Druckträgers einfach und kostengünstig erfolgen. Die Kunststoffschicht kann transparent, semitransparent, farblos und/oder farbig ausgebildet sein.

Eine weitere bevorzugte Ausführungsform sieht vor, dass die Kunststoffschicht aus einem thermoplastischen Kunststoff gebildet ist, welcher eine Glasübergangstemperatur umfasst, die höher liegt als eine Erwärmungstemperatur beim Aufbringen der ersten und/oder zweiten Substratschicht auf die Kunststoffschicht. Dadurch wird bei der Herstellung die Elastizität der aus dem thermoplastischen Kunststoff bestehenden mittleren Lage beibehalten.

In weiteren bevorzugten Ausführungsformen weist die Kunststoffschicht eine Schichtdicke von weniger als 50 µm, insbesondere weniger als 30 µm, und bevorzugt 20 µm oder weniger auf.

Die Aussparung der ersten Substratschicht bildet vorzugsweise gemeinsam mit der Kunststoffschicht im Fensterbereich ein Fenster, durch welches durch die Kunststoffschicht hindurch die zweite Substratschicht sichtbar ist. Die Aussparung kann rundum durch die erste Substratschicht begrenzt sein oder beim endgültigen Druckträger, der entsprechend zugeschnitten sein kann, an den Rand des Druckträgers grenzen bzw. diesen bilden. Der Gestaltung des Wert- und/oder Sicherheitsdokumentes stehen somit viele Möglichkeiten zur Verfügung.

Das Fenster selbst und in dem Fensterbereich angeordnete Sicherheitsmerkmale können vorzugsweise sogenannte Level-1-Sicherheitsmerkmale darstellen, die ohne Zuhilfenahme von technischen Hilfsmitteln durch einen Betrachter leicht verifiziert werden können.

Das Fenster kann in Ausgestaltungen der Erfindung einen transparenten Bereich beinhalten und/oder eingefärbte, nicht-transparente, teil-transparente, fluoreszierende, phosphoreszierende, polarisierende, optisch brechende und/oder holographische Kunststoffbereiche aufweisen. Vorteilhaft können somit Sicherheitsmerkmale in der Kunststoffschicht mit Sicherheitsmerkmalen in der ersten und/oder zweiten Substratschicht kombiniert werden.

Ein erfindungsgemäßes Sicherheits- und/oder Wertdokument weist einen erfindungsgemäßen Druckträger mit einer Wert- und/oder Sicherheitsinformation auf. Das Sicherheits- und/oder Wertdokument kann individualisiert oder personalisiert sein. Der Druckträger kann beispielsweise eine Banknote bilden, die mit einer Wertinformation und einer Nummerierung individualisiert ist.

Das Sicherheits- und/oder Wertdokument ist entsprechend dem Druckträger mit einer ersten, den Großteil des sichtbaren Lichtes absorbierenden Substratschicht auf einer ersten Seite und einer zweiten Substratschicht auf einer zweiten Seite versehen. Die erste Substratschicht weist eine Aussparung auf, die einen Fensterbereich definiert. Wenigstens eine Wert- und/oder Sicherheitsinformation wird auf die Kunststoffschicht und/oder die zweite Substratschicht im Fensterbereich aufgebracht. Durch die lichtdurchlässige Kunststoffschicht hindurch oder auf der Kunststoffschicht, die im Fensterbereich freigelegt und somit sichtbar ist, kann die die Wert- und/oder Sicherheitsinformation ausgelesen werden.

Gemäß einer weiteren Variante der Erfindung können Aussparungen in der ersten Substratschicht mit Aussparungen in der zweiten Substratschicht kombiniert werden. Neben Bereichen, bei welchen nur die erste Substratschicht auf einer Seite die wenigstens eine Kunststoffschicht freilegt, können Bereiche vorgesehen sein, bei welchen die erste und die zweite Substratschicht die Kunststoffschicht freilegen. Zudem sind Varianten möglich, bei denen Aussparungen in den zwei Substratschichten nicht deckungsgleich ausgebildet werden, sodass einerseits Bereiche entstehen, bei welchen die Kunststoffschicht von beiden Seiten zugänglich ist, und andererseits wenigstens ein weiterer Bereich, bei welchem die Kunststoffschicht nur von einer Seite zugänglich ist.

Weitere Vorteile und Einzelheiten der Erfindung werden beispielhaft anhand der in den schematischen Figuren dargestellten Ausführungsbeispielen näher erläutert. Hierbei zeigt:
- Fig. 1: eine schematische Darstellung eines Wertdokumentes mit einem erfindungsgemäßen Druckträger in einer Draufsicht;
- Fig. 2: eine schematische Darstellung des Wertdokumentes der Fig. 1 in einer geschnittenen Ansicht gemäß der Schnittlinie A-A der Fig. 1;
- Fig. 3: eine schematische Darstellung des Wertdokumentes der Fig. 1 und 2 in der Ansicht der Fig. 1 bei rückseitiger Beleuchtung.

Im Folgenden werden beispielhafte Ausführungsformen der Erfindung mit Bezugnahme auf die Figuren beschrieben, wobei gleiche Bezugszeichen sich auf gleiche Elemente beziehen. Es versteht sich, dass auch andere Ausführungsformen erstellt und Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele auch in anderer Weise miteinander kombiniert werden können, sofern nicht etwas anderes angegeben ist.

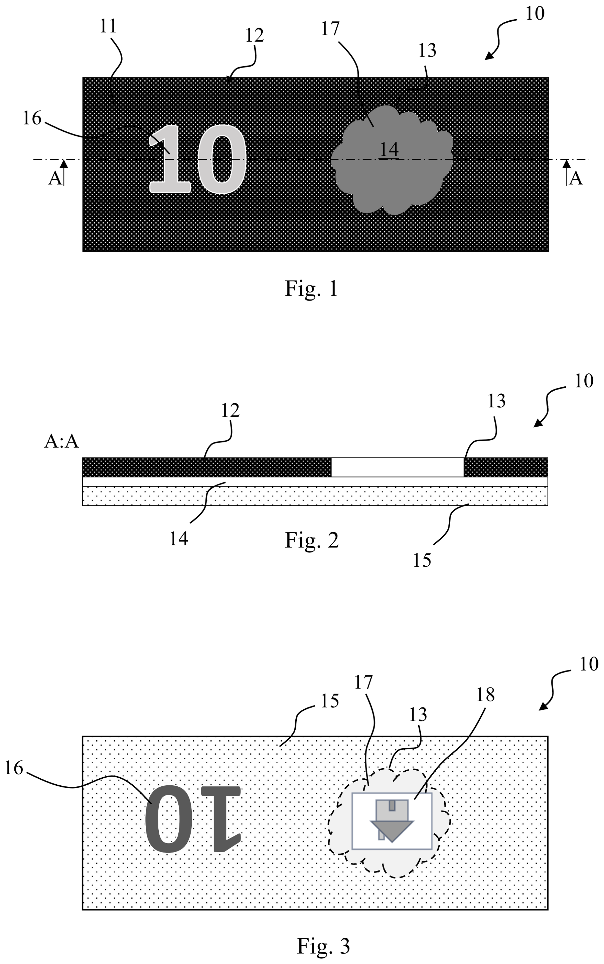

Figur 1 zeigt ein Wertdokument 10 in einer Draufsicht. Das Wertdokument 10 ist aus einem erfindungsgemäßen Druckträger 11 gebildet und weist eine rechteckige Form auf. In der Draufsicht ist die erste Substratschicht 12 gezeigt, die eine im Wesentlichen sämtliche Wellenlängen des sichtbaren Lichtspektrums absorbierende, insbesondere tiefschwarze Färbung aufweist. Auf der ersten Substratschicht 12 ist bevorzugt wenigstens eine stark reflektierende Farbe, insbesondere mit Effektpigmenten aufgebracht. Beispielsweise kann eine Wertinformation16 aufgedruckt sein, welche den Wert des Wertdokumentes 10 angibt.

Die tiefschwarze Färbung der ersten Substratschicht 12 ermöglicht einen für den Betrachter eindrucksvollen und mit handelsüblichen Vervielfältigungsgeräten nicht reproduzierbaren Kontrast, der mit herkömmlichen hellen Substraten nicht erreicht werden kann. Es kann zudem eine Vielzahl stark reflektierender Farben, insbesondere Effektpigmente aufgebracht sein, um vor dem tiefschwarzen Hintergrund einen additiven Farbeindruck zu erreichen.

In der ersten Substratschicht 12 ist eine Aussparung 13 vorgesehen, die den Blick auf die darunterliegende Kunststoffschicht 14 freigibt. Die Aussparung 13 definiert einen Fensterbereich 17, innerhalb dessen aufgrund der Aussparung 13 Licht auf die Kunststoffschicht 14 fallen kann. Die Kunststoffschicht 14 ist lichtdurchlässig gestaltet, um bei einer Beleuchtung seitens der hier gezeigten ersten Substratschicht 12 eine Prüfung eines gegenüber der Aussparung 13 angeordneten Sicherheitsmerkmals der zweiten Substratschicht zu ermöglichen.

Die Kunststoffschicht 14 kann transparent sein, wobei die Kunststoffschicht klar oder mit einer Färbung versehen sein kann. Insbesondere mit einer Färbung der Kunststoffschicht 14 kann die Aussparung 13 bzw. die Kunststoffschicht 14 mit der darunterliegenden zweiten Substratschicht für den Betrachter einen dunkeln, vorzugsweise schwarzen Farbeindruck erhalten. Somit wird ein insgesamt homogenes, dunkles Erscheinungsbild des Wertdokumentes 10 erreicht.

In Figur 2 ist eine Schnittansicht des Wertdokumentes der Figur 1 gezeigt, wobei der Schnitt entlang der Schnittlinie A-A des Wertdokumentes 10 der Figur 1 gewählt wurde. Der Druckträger 11 des Wertdokumentes 10 umfasst drei Schichten, und zwar die erste Substratschicht 12, eine zweite Substratschicht 15 und die Kunststoffschicht 14. Die zweite Substratschicht 15 ist hell, insbesondere weiß, um bekannte Formen von Sicherheitsmerkmalen aufbringen zu können.

Die Kunststoffschicht 14 ist lichtdurchlässig gestaltet, zumindest im Bereich der Aussparung 13, um ein darunter in der zweiten Substratschicht befindliches (in Figur 3 gezeigtes), als Wasserzeichen ausgeführtes Sicherheitsmerkmal rückseitig, von der Seite der ersten Substratschicht 12 aus, mit Licht bestrahlen und durchleuchten zu können. Alternativ kann die Kunststoffschicht 14 im Bereich der Aussparung 13 transparent ausgeführt sein.

Figur 3 zeigt eine Unteransicht der des Wertdokumentes 10 mit rückwärtiger Beleuchtung. Bei rückwärtiger Beleuchtung ist im Bereich der Aussparung der in Figur 1 und 2 gezeigten ersten Substratschicht 12, die hier gestrichelt dargestellt ist, ein als Wasserzeichen ausgeführtes Sicherheitsmerkmal 18 zu erkennen, das in der zweiten Substratschicht 15 angeordnet ist. Idealerweise weist die Kunststoffschicht 14 eine Lichtdurchlässigkeit auf, die zur Erkennung und Prüfung des Sicherheitsmerkmals 18 durch einen Betrachter bei einer Blickrichtung aus der Richtung der zweiten Substratschicht 15 bzw. einer Lichtquelle auf der Seite der ersten Substratschicht 12 ausreicht. Alternativ kann die Kunststoffschicht 14 transparent oder transluzent ausgestaltet sein, um eine Prüfung des Sicherheitsmerkmals 18 auch von der anderen Seite aus, d.h. mit einer Lichtquelle auf der Seite der zweiten Substratschicht 15, prüfen zu können.

### Bezugszeichenliste

- 10: Wertdokument
- 11: Druckträger
- 12: erste Substratschicht
- 13: Aussparung
- 14: Kunststoffschicht
- 15: zweite Substratschicht
- 16: Wertinformation
- 17: Fensterbereich
- 18: Sicherheitsmerkmal

## Patentansprüche

1. Druckträger (11) für ein Wert- und/oder Sicherheitsdokument (10), aufweisend wenigstens eine Kunststoffschicht (14) mit einer ersten Seite und einer zweiten Seite,
wenigstens eine mit der Kunststoffschicht (14) verbundene erste Substratschicht (12) auf der ersten Seite der Kunststoffschicht (14), sowie
wenigstens eine mit der Kunststoffschicht (14) verbundene zweite Substratschicht (15) auf der zweiten Seite der Kunststoffschicht (14), wobei
- die erste Substratschicht (12) wenigstens abschnittsweise ausgestaltet ist, den Großteil des sichtbaren Lichtes zu absorbieren,
- die erste Substratschicht (12) wenigstens eine Aussparung (13) aufweist, die einen Fensterbereich (17) definiert,
- die Kunststoffschicht (14) wenigstens im Fensterbereich (17) lichtdurchlässig ist,
- die zweite Substratschicht (15) mit zumindest einem Sicherheitsmerkmal (18) versehen ist, das wenigstens abschnittsweise im Fensterbereich (17) angeordnet ist.

2. Druckträger (11) nach Anspruch 1, wobei zumindest die erste Substratschicht (12) zumindest abschnittsweise ausgestaltet ist, das Licht eines Wellenlängenbereiches im sichtbaren Lichtspektrum im Wesentlichen vollständig zu absorbieren.

3. Druckträger (11) nach einem der vorhergehenden Ansprüche, wobei die erste Substratschicht (12) in einer Schicht oder in mehreren Schichten des Druckträgers (11) angeordnet ist.

4. Druckträger (11) nach einem der vorhergehenden Ansprüche, wobei die Kunststoffschicht (14) transparent oder transluzent ausgestaltet ist.

5. Druckträger (11) nach einem der vorhergehenden Ansprüche, wobei die zweite Substratschicht (15) zumindest im Fensterbereich (17) wenigstens abschnittsweise lichtdurchlässig ist.

6. Druckträger (11) nach einem der vorhergehenden Ansprüche, wobei die zweite Substratschicht (15) wenigstens abschnittsweise den Großteil des sichtbaren Farbspektrums reflektiert.

7. Druckträger (11) nach einem der vorhergehenden Ansprüche, wobei die erste Substratschicht (12) und/oder zweite Substratschicht (15) von Papier gebildet sind, insbesondere von einem auf Baumwolle basierenden Sicherheitspapier.

8. Druckträger (11) nach einem der vorhergehenden Ansprüche, wobei das mindestens eine Sicherheitsmerkmal (18) der zweiten Substratschicht (15) mittels rückseitiger Beleuchtung aus Richtung der ersten und/oder der zweiten Seite der Kunststoffschicht (14) prüfbar ausgestaltet ist.

9. Druckträger (11) nach einem der vorhergehenden Ansprüche, wobei das mindestens eine Sicherheitsmerkmal (18) ein Wasserzeichen (18) ist.

10. Druckträger (11) nach einem der vorhergehenden Ansprüche, wobei die erste Substratschicht (12) einen dunklen, insbesondere schwarzen Farbton aufweist und die zweite Substratschicht (15) einen hellen, insbesondere weißen Farbton.

11. Druckträger (11) nach Anspruch 9 oder 10, wobei die zweite Substratschicht (15) im Fensterbereich zusätzlich oder alternativ eines oder mehrere aus den folgenden Sicherheitsmerkmalen (18) aufweist: eine Perforation, einen Sicherheitsfaden, eine Sicherheitsfolie.

12. Wert- und/oder Sicherheitsdokument (10), **gekennzeichnet durch** einen Druckträger (11) nach einem der vorhergehenden Ansprüche, wobei auf dem Druckträger (11) wenigstens eine Wertinformation (16) und/oder Sicherheitsinformation aufgebracht ist.

13. Wert- und/oder Sicherheitsdokument (10) nach Anspruch 12, wobei die Wertinformation (16) und/oder Sicherheitsinformation auf die Kunststoffschicht (14) und/oder die zweite Substratschicht (15) im Fensterbereich (17) aufgebracht ist.

14. Verfahren zur Herstellung eines Druckträgers (11) nach einem der Ansprüche 1 bis 11, umfassend die Schritte:
a. Herstellen einer ersten Lage zur Erzeugung der ersten Substratschicht (12) mit einer den Großteil der Wellenlängen des sichtbaren Lichts absorbierenden Färbung und/oder Pigmentierung, mit wenigstens einer Aussparung (13),
b. Herstellen einer zweiten Lage zur Erzeugung der zweiten Substratschicht (15), mit wenigstens einem Sicherheitsmerkmal (18),
c. Herstellen einer wenigstens abschnittsweise lichtdurchlässigen Kunststofflage,
d. Registriertes Zuführen von erster Substratlage und zweiter Substratlage zur Kunststofflage und Aufbringen der ersten Substratlage an einer ersten Seite der Kunststofflage und Aufbringen der zweiten Substratlage an einer zweiten Seite der Kunststofflage, so dass die wenigstens eine Aussparung (13) und das Sicherheitsmerkmal (18) übereinanderliegen.

15. Verfahren nach Anspruch 14, wobei die den Großteil der Wellenlängen des sichtbaren Lichts absorbierenden Färbung und/oder Pigmentierung der ersten Substratschicht (12) durch Beschichten und/oder Bedrucken erfolgt.
